# EUROPÄISCHE PATENTSCHRIFT

(11) **EP 3 408 917 B1**
(45) Veröffentlichungstag und Bekanntmachung des Hinweises auf die Patenterteilung: **18.09.2019**
(21) Anmeldenummer: 17708492.8
(22) Anmeldetag: 02.03.2017
(51) Int. Cl.: H02J 7/00

(54) **VORRICHTUNG UND VERFAHREN ZUR REGELUNG EINES LADEVORGANGS EINER BATTERIE**
DEVICE AND METHOD FOR REGULATING A BATTERY CHARGING PROCESS
DISPOSITIF ET PROCÉDÉ DE RÉGULATION D'UN PROCESSUS DE CHARGE D'UNE BATTERIE

(30) Priorität: 31.03.2016 DE 102016205360
(43) Veröffentlichungstag der Anmeldung: 05.12.2018
(73) Patentinhaber: Siemens Mobility GmbH, 81739 München (DE)
(72) Erfinder: ROMPE, Andre, 12621 Berlin Kaulsdorf (DE)
(86) Internationale Anmeldenummer: PCT/EP2017/054906
(87) Internationale Veröffentlichungsnummer: WO 2017/167540

(56) Entgegenhaltungen:
- US-A- 5 463 305
- US-A- 5 684 382

## Beschreibung

Die vorliegende Erfindung betrifft eine Vorrichtung und ein Verfahren zur Regelung eines Ladevorgangs einer Batterie und ein System mit einer solchen Vorrichtung.

Wiederaufladbare Batterien, die auch als Sekundärbatterien und im Folgenden einfach als Batterien bezeichnet werden, finden in vielen Gebieten der Technik Anwendung. Ein Anwendungsbeispiel ist die Verwendung in Antriebssträngen in zumindest teilweise elektrisch angetriebenen Fahrzeugen. Ein Beispiel für solche Fahrzeuge sind elektrisch betriebene Linienfahrzeuge. Elektrische Antriebe sind für Linienfahrzeuge deshalb vorteilhaft, da normalerweise die Linienfahrzeiten begrenzt und durch Zeiträume (Fahrpausen) getrennt sind, in denen die Batterie aufgeladen werden kann.

Beim Laden von Batterien kann, insbesondere dann, wenn die zu ladende Batterie zu Beginn des Ladevorgangs einen geringen Ladezustand aufweist, eine hohe Stromstärke auftreten.

Die Ladeleistung ist dabei durch die aktuelle Batteriespannung und die Stromstärke des Ladestroms bestimmt.

Um zu verhindern, dass der auftretende Ladestrom die Batterie oder andere Komponenten schädigt, wird im sogenannten CCCV-Ladeverfahren (CCCV steht für constant current constant voltage, zu Deutsch: konstanter Strom, konstante Spannung) der Ladevorgang durch den Lader so geregelt, dass in einer ersten Phase ein Ladestrom konstanter Stromstärke bereitsteht. Dies wird erreicht, indem in der ersten Phase der Strom entsprechend geregelt wird.

Das Ladegerät kann zusätzlich oder alternativ konfiguriert sein, die Stromstärke unter Verwendung von einer batterieseitig bevorzugten Ladestromstärke I_{bev} und/oder einer batterieseitig bevorzugten Ladespannung U_{bev} zu bestimmen.

Die Batterie und/oder ein Batteriemanagementsystem kann beziehungsweise können entsprechend ausgebildet sein, die bevorzugte Ladestromstärke und/oder die bevorzugte Ladespannung U_{bev} zu bestimmen und weiter zu signalisieren.

Druckschrift US 5 684 382 A lehrt eine Vorrichtung und ein Verfahren im Sinne der Präambel des Anspruchs 1.

Erfindungsgemäß wird eine Vorrichtung gemäß Anspruch 1 und ein Verfahren gemäß Anspruch 10 zur Regelung eines Ladevorgangs einer Batterie zur Verfügung gestellt.

Die Vorrichtung umfasst einen Eingang für eine Signalverbindung, über welchen der Vorrichtung eine zum Laden bevorzugte Ladestromstärke I_{bev} signalisiert werden kann, und einen Ausgang für eine weitere Signalverbindung, über welche die Vorrichtung eine zum Laden angeforderte Stromstärke I_{anf} signalisieren kann.

Die Vorrichtung ist weiterhin ausgebildet, über die Signalverbindung eine von der Batterie empfangene Ladestromstärke I_{emf} signalisiert zu bekommen und die empfangene Ladestromstärke I_{emf} zusammen mit der bevorzugten Ladestromstärke I_{bev} für die Bestimmung der angeforderten Stromstärke I_{anf} zu verwenden.

Das erfindungsgemäße Verfahren umfasst entsprechende Schritte.

Da die empfangene Ladestromstärke I_{emf} zusammen mit der bevorzugten Ladestromstärke I_{bev} für die Bestimmung der angeforderten Stromstärke I_{anf} verwendet wird, kann die Stromstärke I_{anf} so bestimmt werden, dass Stromstärkenverluste zwischen dem Ladegerät und der Batterie, die beispielsweise durch parallel geschaltete Verbraucher bedingt sein können, ohne direkte Kenntnis über Ursachen der Stromstärkenverluste kompensiert werden können.

Die Vorrichtung ist weiterhin so vorgerichtet, dass ihr weiterhin zumindest eine zum Laden der Batterie bereitgestellte Stromstärke I_{ber} signalisiert werden kann. Dann ist die Vorrichtung vorgerichtet, die angeforderte Stromstärke I_{anf} unter Verwendung der bereitgestellten Stromstärke I_{ber} zu bestimmen.

Damit wird die Vorrichtung ertüchtigt, die bereitgestellte Stromstärke I_{ber} bei der Laderegelung zu berücksichtigen, wodurch eine noch genauere Regelung ermöglicht wird. Insbesondere kann dann festgestellt werden, ob die empfangene Stromstärke I_{emf} der bereitgestellten Stromstärke I_{ber} entspricht.

In einer bevorzugten Ausführungsform kann der Vorrichtung weiterhin eine zum Laden der Batterie bevorzugte Ladespannung U_{bev} signalisiert werden, und die Vorrichtung ist ausgebildet, dem Ladegerät eine zum Laden der Batterie angeforderte Ladespannung U_{anf} zu signalisieren.

Damit bieten sich der Vorrichtung erweiterte Regelungsmöglichkeiten, durch die sich der Ladevorgang noch besser regeln lässt.

Insbesondere kann die angeforderte Ladespannung U_{anf} gleich der bevorzugten Ladespannung U_{bev} sein.

So wird sichergestellt, dass das Ladegerät die Batterie mit der von einer batterieseitig bevorzugten Ladespannung laden kann.

Die Vorrichtung kann so vorgerichtet sein, dass über noch eine weitere Signalverbindung weiterhin zumindest eine zum Laden der Batterie bereitgestellte Ladespannung U_{ber} signalisiert werden kann. Dann kann die Vorrichtung vorgerichtet sein, die angeforderte Stromstärke I_{anf} unter Verwendung der bereitgestellten Ladespannung U_{ber} zu bestimmen.

Damit wird die Vorrichtung ertüchtigt, die bereitgestellte Ladespannung U_{ber} bei der Laderegelung zu berücksichtigen, wodurch eine noch genauere Regelung ermöglicht wird.

Die Vorrichtung kann weiterhin ausgebildet sein, das Ausgangssignal so zu bestimmen, dass die angeforderte Stromstärke I_{anf} eine Differenz zwischen der bevorzugten Stromstärke I_{bev} und der empfangenen Stromstärke I_{emf} kompensiert.

So werden Stromstärkenverluste zwischen dem Ladegerät und der Batterie, die beispielsweise durch parallel geschaltete Verbraucher bedingt sein können, ohne direkte Kenntnis über Ursachen der Stromstärkenverluste kompensiert.

Die Vorrichtung kann weiterhin ausgebildet sein, das Ausgangssignal so zu bestimmen, dass die angeforderte Stromstärke I_{anf} proportional zur Differenz zwischen dem Zweifachen des bevorzugten Ladestroms I_{bev} und der empfangenen Stromstärke I_{emf} ist: I_{anf} ∼ 2* I_{bev} - I_{emf}.

Dies ist eine Form der Kompensation. Insbesondere kann I_{anf} = 2* I_{bev} - I_{emf} Sein.

Erfindungsgemäß wird weiterhin ein System nach Anspruch 8 vorgestellt. Das System umfasst die erfindungsgemäß vorgestellte Vorrichtung und die Batterie. Die Batterie umfasst zumindest einen Spannungseingang, über den die Batterie vom Ladegerät geladen werden kann. Die Batterie umfasst weiterhin mindestens einen Ausgang für die Signalverbindung.

In einer bevorzugten Ausführungsform umfasst das System weiterhin das Ladegerät, wobei das Ladegerät einen mit dem Spannungseingang der Batterie verbundenen Spannungsausgang zur Bereitstellung eines Ladestroms zum Laden der Batterie mit einer Stromstärke I_{ber} und einen Eingang für die weitere Signalverbindung umfasst.

Das System kann so ausgebildet sein, dass der Vorrichtung weiterhin eine zum Laden der Batterie bevorzugte Ladespannung U_{bev} signalisiert werden kann, und die Vorrichtung ausgebildet ist, dem Ladegerät eine zum Laden der Batterie angeforderte Ladespannung U_{anf} zu signalisieren, wobei dann das Ladegerät vorgerichtet sein kann, die Stromstärke I_{ber} unter Verwendung der angeforderten Ladespannung U_{anf} und einer bereitgestellten Ladespannung U_{ber}, mit der der Ladestrom bereitgestellt wird, zu bestimmen.

In einer bevorzugten Ausführungsform umfasst das erfindungsgemäße Verfahren Bestimmen einer zum weiteren Laden erforderlichen Spannung U_{erf} unter Verwendung der bevorzugten Stromstärke I_{bev} und Übertragen der bestimmten erforderlichen Spannung U_{erf} an das Ladegerät.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden. Es zeigen:

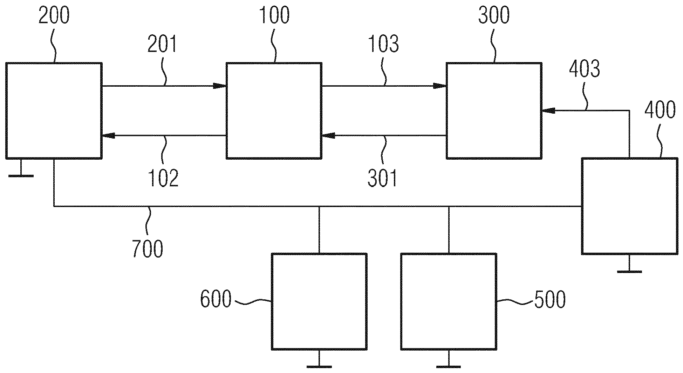

- Figur 1: ein System mit einer Vorrichtung 100 zur Regelung eines Ladevorgangs einer Batterie gemäß einem Ausführungsbeispiel der Erfindung.

In der Figur 1 ist ein System mit einer Vorrichtung 100 zur Regelung eines Ladevorgangs einer Batterie 400 gemäß einem Ausführungsbeispiel der Erfindung gezeigt. Das System umfasst weiterhin ein Ladegerät 200, beispielsweise eine Hochleistungsladestation (HPCS für High Power Charging Station). Die Vorrichtung 100 ist beispielsweise ein mikroprozessorgesteuertes Ladesteuergerät (OnBoard Charging Control, ComBox, CICU, electro vehicle charge control (EVCC)).

Das Ladegerät 200 ist über eine Spannungsversorgungsverbindung 700 zur Bereitstellung eines Ladestroms mit der Batterie 400 verbunden. Entlang der Spannungsversorgungsverbindung 700 sind beispielhaft zwei Verbraucher 500, 600, etwa eine Heizung und eine Lüftung, parallel geschaltet. Die Rückverbindung wird im dargestellten Beispiel über Massekontakte bewirkt.

Im Normalbetrieb, wenn die Batterie 400 nicht durch das Ladegerät 200 geladen wird, werden die Verbraucher 500, 600 gegebenenfalls von der Batterie 400 mit Strom versorgt. Im Ladebetrieb, wenn die Batterie 400 durch das Ladegerät 200 geladen wird, werden die Verbraucher 500, 600 gegebenenfalls vom Ladegerät 200 mit Strom versorgt.

Die Vorrichtung 100 umfasst einen logischen oder physikalischen Eingang für eine Signalverbindung 403, 301, über welche die Batterie 400 eine zum Laden bevorzugte Ladestromstärke I_{bev} signalisiert.

Die Vorrichtung 100 umfasst weiterhin einen logischen oder physikalischen Ausgang für eine weitere Signalverbindung 102, über welche die Vorrichtung 100 dem Ladegerät 200 eine zum Laden sowie gegebenenfalls zur Versorgung der Hilfssysteme 500 und 600 angeforderte Stromstärke I_{anf} signalisiert.

Die Vorrichtung 100 umfasst einen weiteren logischen oder physikalischen Eingang für eine Signalverbindung 201, über welchen das Ladegerät 200 der Vorrichtung 100 die bereitgestellte Stromstärke I_{ber} signalisiert. Die Signalverbindung 201 ist optional und umfasst in einer weiteren Ausführungsform Signalisierung der bereitgestellten Spannung U_{ber} .

Die Vorrichtung 100 umfasst weiterhin einen weiteren logischen oder physikalischen Ausgang für eine weitere Signalverbindung 103, über welche die Vorrichtung 100 der Batterie 400 die bereitgestellte Stromstärke I_{ber} des Ladestroms signalisiert. Die Signalverbindung 103 ist optional und umfasst in einer weiteren Ausführungsform Signalisierung der bereitgestellten Spannung U_{ber}.

Signalverbindungen 102, 201, 103, 301 und 403 können durch ein Bussystem realisiert sein. Das Bussystem kann auch die Spannungsversorgungsverbindung 700 realisieren.

Der Vorrichtung 100 wird über die Signalverbindung 403, 301 von der Batterie 400 auch eine empfangene Ladestromstärke I_{emf} signalisiert. Die Vorrichtung 100 verwendet die empfangene Ladestromstärke I_{emf} zusammen mit der bevorzugten Ladestromstärke I_{bev} für die Bestimmung der angeforderten Stromstärke I_{anf}. In einer weiteren Ausführungsform umfasst die Signalverbindung 403, 301 Signalisierung einer bevorzugten Ladespannung U_{bev}.

Im dargestellten Beispiel umfasst die Signalverbindung 403, 301 ein Batteriemanagementsystem 300, welches über Signalteilverbindung 403 von der Batterie 400 die empfangene Ladestromstärke I_{emf} und die bevorzugte Ladestromstärke I_{bev} signalisiert bekommt und über Signalteilverbindung 301 die empfangene Ladestromstärke I_{emf} und die bevorzugte Ladestromstärke I_{bev} der Vorrichtung 100 signalisiert.

Die Vorrichtung 100 ist weiterhin ausgebildet, das Ausgangssignal so zu bestimmen, dass die angeforderte Stromstärke I_{anf} eine Differenz zwischen der bevorzugten Ladestromstärke I_{bev} und der empfangenen Ladestromstärke I_{emf} kompensiert.

So werden Stromstärkenverluste zwischen dem Ladegerät 200 und der Batterie 400, die durch entlang der Spannungsversorgungsverbindung 700 parallel geschaltete Verbraucher 500, 600, beispielsweise eine Heizung und eine Lüftung oder eine Klimaanlage, bedingt sein können, ohne direkte Kenntnis über Ursachen und Betrag der Stromstärkenverluste kompensiert.

Die Kompensation kann unterschiedlich erfolgen. Ziel der Kompensation ist, die Differenz zwischen I_{bev} - I_{emf} für jeden Zeitpunkt zu minimieren, insbesondere so, dass I_{bev} - I_{emf} stets gleich Null ist.

In einem Ausführungsbeispiel ist die angeforderte Stromstärke I_{anf} proportional zur Differenz zwischen dem Zweifachen des bevorzugten Ladestroms I_{bev} und der empfangenen Ladestromstärke I_{emf} ist:
I_{anf} ∼ 2* I_{bev} - I_{emf}. In einer speziellen Ausführungsform dieses Beispiels ist
I_{anf} = 2* I_{bev} - I_{emf}. Sofern zwischen I_{bev} und I_{emf} eine Differenz besteht, wird diese durch die Regelung sofort und vollständig kompensiert. Besteht hingegen keine Differenz, ist I_{anf} = I_{bev}.

Die Vorrichtung kann weiterhin dahin gehend ertüchtigt sein, auch Schutz der Batterie vor zu hoher Bestromung bei Lastabwurf, also wenn ein parallel geschalteter Verbraucher während des Ladevorgangs abgeschaltet wird, zu bieten. Dies kann erreicht werden, wenn die Vorrichtung 100 ausgebildet ist, zusätzlich zur angeforderten Stromstärke I_{anf} eine für Bereitstellung der bevorzugten Stromstärke I_{bev} erforderliche Spannung U_{erf} zu bestimmen und an das Ladegerät zu übermitteln. Der bevorzugten Stromstärke I_{bev} entspricht nämlich ein Ladungszustand der Batterie und damit eine zum weiteren Laden erforderliche Spannung U_{erf}, die geringer ist als eine Schlussspannung U_{fin}, auf die der Ladevorgang grundsätzlich begrenzt ist und mit der eine nahezu vollständig geladene Batterie geladen werden muss. Erfolgt ein Lastabwurf bewirkt eine Spannungsbegrenzung auf die erforderliche Spannung U_{erf}, dass das Ladegerät lediglich die nach Lastabwurf anzufordernde Stromstärke liefert. Insbesondere wird eine eigenständige Spannungsbegrenzung auf die Schlussspannung U_{fin} überflüssig, da sich die erforderliche Spannung U_{erf} an die Schlussspannung U_{fin} mit steigendem Ladungszustand der Batterie asymptotisch annähert.

In einer beispielhaften Ausführungsform des erfindungsgemäßen Verfahrens wird ein Ladevorgangs einer Batterie geregelt, wobei der Ladevorgang durch ein Ladegerät entsprechend einer übertragenen angeforderten Stromstärke I_{anf} erfolgt. Dazu wird eine zum Laden der Batterie bevorzugte Stromstärke I_{bev}, beispielsweise von der Batterie oder von einem Steuergerät, empfangen. Zusätzlich wird eine von der Batterie empfangene Stromstärke I_{emf}, beispielsweise von der Batterie oder von dem Steuergerät, empfangen. Dann wird eine angeforderte Stromstärke I_{anf} unter Verwendung der empfangenen Stromstärke I_{emf} und der bevorzugten Stromstärke I_{bev} bestimmt. Schließlich wird die bestimmte angeforderte Stromstärke I_{anf} an das Ladegerät übertragen.

Die Erfindung kann beispielsweise für Ladevorgänge von zumindest teilweise elektrisch angetriebenen Fahrzeugen verwendet werden. Durch die Kompensation wird dabei erreicht, dass die Batterie einen bestimmten Ladezustand innerhalb eines vorgegebenen Ladezeitraums erreicht unabhängig davon, ob die weiteren Verbraucher im Betrieb sind oder nicht. Dies ist insbesondere vorteilhaft für elektrisch oder hybrid angetriebene Linienfahrzeuge mit durch Linienfahrtzeiten begrenzten Ladezeiträumen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (100) zur Regelung eines Ladevorgangs einer Batterie (400), wobei die Vorrichtung (100) einen Eingang für eine Signalverbindung (403, 301), über welchen der Vorrichtung eine zum Laden bevorzugte Ladestromstärke I_{bev} signalisierbar ist, und einen Ausgang für eine weitere Signalverbindung (102), über welchen mittels der Vorrichtung (100) eine angeforderte Stromstärke I_{anf} signalisierbar ist, umfasst, wobei die Vorrichtung (100) weiterhin ausgebildet ist, über die Signalverbindung (403, 301) oder eine andere Signalverbindung eine von der Batterie empfangene Ladestromstärke I_{emf} signalisiert zu bekommen und die empfangene Ladestromstärke I_{emf} zusammen mit der bevorzugten Ladestromstärke I_{bev} für die Bestimmung der angeforderten Stromstärke I_{anf} zu verwenden, **dadurch gekennzeichnet, dass** der Vorrichtung (100) weiterhin zumindest eine zum Laden der Batterie (400) bereitgestellte Stromstärke I_{ber} signalisierbar ist und die Vorrichtung (100) vorgerichtet ist, die angeforderte Stromstärke I_{anf} unter Verwendung der bereitgestellten Stromstärke I_{ber} zu bestimmen.

2. Vorrichtung nach Anspruch 1, wobei der Vorrichtung (100) weiterhin eine zum Laden der Batterie (400) bevorzugte Ladespannung U_{bev} signalisiert werden kann, und die Vorrichtung (100) ausgebildet ist, eine zum Laden der Batterie (400) angeforderte Ladespannung U_{anf} an ein Ladegerät (200) zu signalisieren.

3. Vorrichtung nach Anspruch 2, wobei die angeforderte Ladespannung U_{anf} gleich der bevorzugten Ladespannung U_{bev} ist.

4. Vorrichtung nach einem der vorangehenden Ansprüche, wobei der Vorrichtung (100) über noch eine weitere Signalverbindung (201) weiterhin zumindest eine zum Laden der Batterie (400) bereitgestellte Ladespannung U_{ber} signalisierbar ist und die Vorrichtung (100) vorgerichtet ist, die angeforderte Stromstärke I_{anf} unter Verwendung der bereitgestellten Ladespannung U_{ber} zu bestimmen.

5. Vorrichtung nach einem der vorangehenden Ansprüche, wobei die Vorrichtung (100) weiterhin ausgebildet ist, das Ausgangssignal so zu bestimmen, dass die angeforderte Stromstärke I_{anf} eine Differenz zwischen der bevorzugten Ladestromstärke I_{bev} und der empfangenen Ladestromstärke I_{emf} kompensiert.

6. Vorrichtung nach Anspruch 5, wobei die Vorrichtung (100) weiterhin ausgebildet ist, das Ausgangssignal so zu bestimmen, dass die angeforderte Stromstärke I_{anf} proportional zur Differenz zwischen dem Zweifachen des bevorzugten Ladestroms I_{bev} und der empfangenen Ladestromstärke I_{emf} ist: I_{anf} ∼ 2* I_{bev} - I_{emf}.

7. System umfassend eine Vorrichtung (100) nach einem der vorangehenden Ansprüche und die Batterie (400), wobei die Batterie zumindest einen Spannungseingang umfasst, über den die Batterie (400) von einem Ladegerät (200) ladbar ist, und wobei die Batterie (400) weiterhin mindestens einen Ausgang für die Signalverbindung (403, 301) umfasst.

8. System nach einem der Ansprüche 6 und 7 weiterhin umfassend das Ladegerät, wobei das Ladegerät (200) einen Eingang für die weitere Signalverbindung (102) und einen mit dem Spannungseingang der Batterie verbundenen Spannungsausgang zur Bereitstellung eines Ladestroms zum Laden der Batterie mit einer Stromstärke I_{ber} umfasst.

9. System nach Anspruch 8, wobei die Vorrichtung (100) gemäß Anspruch 2 ausgebildet ist und das Ladegerät (200) vorgerichtet ist, die Stromstärke I_{ber} unter Verwendung der angeforderten Ladespannung U_{anf} und einer Ladespannung U_{ber}, mit der der Ladestrom bereitgestellt wird, zu bestimmen.

10. Verfahren zur Regelung eines Ladevorgangs einer Batterie (400), wobei der Ladevorgang durch ein Ladegerät entsprechend einer angeforderten Stromstärke I_{anf} erfolgt, mit den folgenden Schritten: Empfangen einer zum Laden der Batterie bevorzugten Stromstärke I_{bev}, Empfangen einer von der Batterie empfangenen Stromstärke I_{emf}, Empfangen einer zum Laden der Batterie (400) bereitgestellten Stromstärke I_{ber}, Bestimmen der angeforderten Stromstärke I_{anf} unter Verwendung der empfangenen Stromstärke I_{emf} und der bevorzugten Stromstärke I_{bev} und der bereitgestellten Stromstärke I_{ber} und Übertragen der bestimmten angeforderten Stromstärke I_{anf} an das Ladegerät.

11. Verfahren nach Anspruch 10, weiterhin umfassend:
Bestimmen einer zum weiteren Laden erforderlichen Spannung U_{erf} unter Verwendung der bevorzugten Stromstärke I_{bev} und Übertragen der bestimmten erforderlichen Spannung U_{erf} an das Ladegerät.

## Claims

1. Device (100) for regulating a charging process of a battery (400), wherein the device (100) comprises an input for a signal connection (403, 301), via which input a charging current amplitude I_{bev} preferred for charging can be signaled to the device, and an output for a further signal connection (102), via which output a required current amplitude I_{anf} can be signaled by means of the device (100), wherein the device (100) is further designed to receive signaling of a charging current amplitude I_{emf}, received from the battery, via the signal connection (403, 301) or another signal connection, and to use the received charging current amplitude I_{emf} together with the preferred charging current amplitude I_{bev} for the determination of the required current amplitude I_{anf}, **characterized in that**
at least one current amplitude I_{ber} supplied for charging the battery (400) can be additionally signaled to the device (100) and the device (100) is configured to determine the required current amplitude I_{anf} using the supplied current amplitude I_{ber}.

2. Device according to Claim 1, wherein a preferred charging voltage U_{bev} for charging the battery (400) can also be signaled to the device (100), and the device (100) is designed to signal a charging voltage U_{anf} required for charging the battery (400) to a charging device (200).

3. Device according to Claim 2, wherein the required charging voltage U_{anf} is equal to the preferred charging voltage U_{bev}.

4. Device according to any one of the preceding claims, wherein via a further signal connection (201), at least one charging voltage U_{ber} supplied for charging the battery (400) can be additionally signaled to the device (100) and the device (100) is configured to determine the required current amplitude I_{anf} using the supplied charging voltage U_{ber}.

5. Device according to any one of the preceding claims, wherein the device (100) is further designed to determine the output signal such that the required current amplitude I_{anf} compensates a difference between the preferred charging current amplitude I_{bev} and the received charging current amplitude I_{emf}.

6. Device according to Claim 5, wherein the device (100) is further designed to determine the output signal such that the required current amplitude I_{anf} is proportional to the difference between double the preferred charging current I_{bev} and the received charging current amplitude I_{emf}: I_{anf} ∼ 2* I_{bev} - I_{emf}.

7. System comprising a device (100) according to any one of the preceding claims and the battery (400), wherein the battery comprises at least one voltage input, via which the battery (400) can be charged by a charging device (200), and wherein the battery (400) further comprises at least one output for the signal connection (403, 301).

8. System according to either one of Claims 6 and 7, further comprising the charging device, wherein the charging device (200) comprises an input for the further signal connection (102) and a voltage output connected to the voltage input of the battery for supplying a charging current for charging the battery with a current amplitude I_{ber}.

9. System according to Claim 8, wherein the device (100) is designed according to Claim 2 and the charging device (200) is configured to determine the current amplitude I_{ber} using the required charging voltage U_{anf} and a charging voltage U_{ber}, with which the charging current is supplied.

10. Method for regulating a charging process of a battery (400), wherein the charging process is performed by means of a charging device according to a required current amplitude I_{anf}, having the following steps:
receiving a current amplitude I_{bev} preferred for charging the battery, receiving a current amplitude I_{emf} received from the battery, receiving a current amplitude I_{ber} supplied for charging the battery (400), determining the required current amplitude I_{anf} using the received current amplitude I_{emf} and the preferred current amplitude I_{bev} and the supplied current amplitude I_{ber}, and transmitting the determined required current amplitude I_{anf} to the charging device.

11. Method according to Claim 10, further comprising: determining a voltage U_{erf} required for the further charging, using the preferred current amplitude I_{bev} and transmitting the determined required voltage U_{erf} to the charging device.

## Revendications

1. Dispositif (100) de régulation d'une opération de charge d'une batterie (400), le dispositif (100) comprenant une entrée pour une liaison (403, 301) de signal, par laquelle il peut être signalé au dispositif une intensité I_{bev} de courant de charge préférée pour la charge, et une sortie pour une autre liaison (102) de signal, par laquelle il peut être signalé, au moyen du dispositif (100), une intensité I_{anf} de courant demandée, le dispositif (100) étant constitué, en outre, pour recevoir, de manière signalée par la liaison (403, 301) de signal ou par une autre liaison de signal, une intensité I_{emf} de courant de charge reçue par la batterie et utiliser l'intensité I_{emf} de courant de charge reçue, ensemble avec l'intensité I_{bev} de courant de charge préférée, pour déterminer l'intensité I_{anf} de courant demandée, **caractérisé en ce qu'**il peut être signalé au dispositif (100), en outre, au moins une intensité I_{ber} de courant mise à disposition pour charger la batterie et le dispositif (100) est prévu pour déterminer l'intensité I_{anf} de courant demandée en utilisant l'intensité I_{ber} de courant mise à disposition.

2. Dispositif suivant la revendication 1, dans lequel il peut être signalé au dispositif (100), en outre, une tension U_{bev} de charge préférée pour charger la batterie (400) et le dispositif est constitué pour signaler à un appareil (200) de charge la tension U_{anf} de charge demandée pour charger la batterie (400).

3. Dispositif suivant la revendication 2, dans lequel la tension U_{anf} de charge demandée est égale à la tension U_{bev} de charge préférée.

4. Dispositif suivant l'une des revendications précédentes, dans lequel il peut être signalé au dispositif (100) par encore une autre liaison (201) de signal, en outre, au moins une tension U_{ber} de charge mise à disposition pour charger la batterie (400) et le dispositif (100) est conçu pour déterminer l'intensité I_{anf} de courant demandée en utilisant la tension U_{ber} de charge mise à disposition.

5. Dispositif suivant l'une des revendications précédentes, dans lequel le dispositif (100) est constitué, en outre, pour déterminer le signal de sortie, de manière à ce que l'intensité I_{anf} de courant demandée compense une différence entre l'intensité I_{bev} de courant de charge préférée et l'intensité I_{emf} de courant de charge reçue.

6. Dispositif suivant la revendication 5, dans lequel le dispositif (100) est constitué, en outre, pour déterminer le signal de sortie, de manière à ce que l'intensité I_{anf} de courant demandée soit proportionnelle à la différence entre deux fois le courant I_{bev} de charge préférée et l'intensité I_{emf} de courant de charge reçue : I_{anf} ∼ 2* I_{bev} - I_{emf}.

7. Système comprenant un dispositif (100) suivant l'une des revendications précédentes et la batterie (400), la batterie comprenant au moins une entrée de tension, par laquelle la batterie (400) peut être chargée par un appareil (200) de charge, et dans lequel la batterie (400) comprend, en outre, au moins une sortie pour la liaison (403, 301) de signal.

8. Système suivant l'une des revendications 6et 7, comprenant, en outre, l'appareil de charge, l'appareil (200) de charge comprenant une entrée pour l'autre liaison (102) de signal et une sortie de tension, qui est reliée à l'entrée de tension de la batterie, pour la mise à dispositif d'un courant de charge pour charger la batterie par une intensité I_{ber} de courant.

9. Système suivant la revendication 8, dans lequel le dispositif (100) est constitué suivant la revendication 2 et l'appareil (200) de charge est prévu pour déterminer l'intensité I_{ber} de courant en utilisant la tension U_{anf} de charge demandée et une tension U_{ber} de charge, à laquelle le courant de charge est mis à disposition.

10. Procédé de régulation d'une opération de charge d'une batterie (400), l'opération de charge s'effectuant par un appareil de charge conformément à un courant I_{anf} de charge demandé, comprenant les stades suivants :
réception d'une intensité I_{bev} de courant préférée pour charger la batterie, réception d'une intensité I_{emf} de courant reçue par la batterie, réception d'une intensité I_{ber} de courant mise à disposition pour charger la batterie (400), détermination de l'intensité I_{anf} de courant demandée en utilisant l'intensité I_{amf} de courant reçue et l'intensité I_{bev} de courant préférée et l'intensité I_{ber} de courant mise à disposition et transmission de l'intensité I_{anf} de courant demandée, qui a été déterminée, à l'appareil de charge.

11. Procédé suivant la revendication 11, comprenant, en outre : détermination d'une tension U_{erf} nécessaire pour continuer la charge, en utilisant l'intensité I_{bev} de courant préférée, et transmission de la tension U_{erf} nécessaire, qui a été déterminée, à l'appareil de charge.
